# EUROPÄISCHE PATENTSCHRIFT

(11) **EP 1 483 886 B1**
(45) Veröffentlichungstag und Bekanntmachung des Hinweises auf die Patenterteilung: **11.12.2013**
(21) Anmeldenummer: 03720157.1
(22) Anmeldetag: 12.03.2003
(51) Int. Cl.: H04M 3/523

(54) **VERFAHREN ZUM BETREIBEN EINES CALL-CENTERS**
METHOD FOR OPERATING A CALL-CENTRE
PROCEDE D'EXPLOITATION D'UN CENTRE D'APPEL

(30) Priorität: 12.03.2002 DE 10210791
(43) Veröffentlichungstag der Anmeldung: 08.12.2004
(73) Patentinhaber: Deutsche Telekom AG, 53113 Bonn (DE)
(72) Erfinder: KUNKEL, Helmut, 67098 Bad Dürkheim (DE)
(74) Vertreter: Riebling, Peter
(86) Internationale Anmeldenummer: PCT/DE2003/000802
(87) Internationale Veröffentlichungsnummer: WO 2003/077519

(56) Entgegenhaltungen:
- EP-A- 0 515 068
- EP-A- 1 069 750

## Beschreibung

Die Erfindung betrifft ein Verfahren zum Betreiben eines Call-Centers.

In einem Call-Center werden von außen kommende Anrufe durch ein automatisches Anrufverteil-System (ACD-System, Automatic Call Distribution) nach bestimmten Kriterien geordnet und automatisch an die Terminals der Mitarbeiter - sogenannte Call-Center-Agenten - verteilt. Sind alle Terminals mit Gesprächsverbindungen zu externen Anrufern belegt, ist die Kapazität des Call-Centers erschöpft; weitere Anrufe können dann nicht mehr persönlich entgegengenommen werden, sondern nur noch mit Hilfe eines interaktiven Anrufbeantwortungs-Systems (IVR-System, Interactive Voice Response) bewältigt werden.

Leistung und Qualität eines Call-Centers lassen sich an der Anzahl der bearbeiteten Anrufe sowie der Erreichbarkeit der Agenten (sog. Service-Level) messen. Es ist klar, dass die Erreichbarkeit eines Mitarbeiters umgekehrt proportional der Dauer eines telefonischen Kundenkontakts steht. Der Produktivität der Mitarbeiter und damit der Effizienz eines Call-Centers besonders abträglich sind Telefongespräche, bei denen der externe Gesprächspartner den Call-Center-Agenten zu untätigem Warten zwingt. Gründe für solche erzwungenen Gesprächspausen können beispielsweise die Suche von Dokumenten oder eine interne Beratung mit einem Gesprächspartner im Hintergrund sein.

In der Praxis ergibt sich dabei oft das Problem, dass der externe Anrufer die höfliche Bitte des Call-Center-Agenten, er möge doch bitte nach Auffinden des gesuchten Dokuments oder einer erfolgten Entscheidungsfindung noch einmal anrufen, ignoriert und sich abrupt mit dem Hinweis abwendet, der Agent solle sich doch bitte einen Moment gedulden. Der Agent befindet sich nun in einer schwierigen Lage: Er kann nicht einschätzen, wie lange die durch den externen Anrufer verursachte Gesprächspause andauern wird, und ob danach überhaupt eine Erledigung des an ihn herangetragenen Anliegens möglich sein wird.

Unter den Aspekten eines möglichst hohen Service-Levels einerseits und dem persönlichen Zwang, möglichst viele Anrufe erledigen zu sollen, andererseits ergibt sich für den Call-Center-Agenten ein schier unauflöslicher Zielkonflikt: Bricht er die Verbindung mit dem externen Anrufer nach einer bestimmten Wartezeit ab, so kann er sich in der eingesparten Zeit einem anderen Gesprächspartner widmen, was zu einer erhöhten Produktivität des Mitarbeiters führt. Auf der anderen Seite nötigt ihn das von ihm erwartete kundenorientierte Verhalten dazu, die Wiederaufnahme des Gesprächs durch den externen Anrufer untätig abzuwarten, obwohl er weder absehen kann, wie lange dies dauern wird, noch ob das Gespräch überhaupt fortgesetzt werden wird, und wenn ja, ob es zu einem guten Ende geführt werden kann.

In EP 0 515 068 A ist ein Verfahren zum Betreiben eines Call-Centers offenbart, bei dem von außen kommende Telefonanrufe automatisch auf Terminals verteilt werden, um von Call-Center-Agenten beantwortet zu werden. Ein externer Anruf wird mit einem freien Terminal eines Agenten verbunden. Kommt es zu einer voraussichtlich längeren Wartezeit für den Agenten, kann der Agent zwischenzeitlich den Anruf automatisch handhaben lassen. Hierzu spricht der Agent den Namen des Anrufers in ein Aufzeichnungssystem. Der gesprochene Name wird gespeichert und zusammen mit einer automatischen Ansage für den Anrufer verwendet, die dem Anrufer vorgespielt wird. Die vom Agenten aufgezeichnete Mitteilung ist also zur Information des Anrufers bestimmt und nicht für die Agenten. Wünscht der Anrufer eine erneute persönlich Beratung, so wird erneut eine Verbindung mit einem freien Terminal eines Agenten hergestellt. Durch das beschriebene Verfahren kann die Produktivität der Agenten und die Kundenzufriedenheit erhöht werden.

US 5 915 010 A offenbart ein Verfahren zum Betreiben eines Call-Centers, bei dem ein externer Anruf in an sich üblicher Weise zunächst mit einem freien Terminal eines Agenten verbunden wird. Der Agent kann eine Weiterschaltung des Anrufs auf eine separate Haltelinie initiieren, wobei ein Kommentar des Agenten betreffend das unterbrochene Gespräch gespeichert wird. Dieser Kommentar wird der gehaltenen Verbindung automatisch zugeordnet. Ist der externe Anrufer nach einer bestimmten Zeit wieder bereit, das Gespräch fortzusetzen, so wird der so lange gehaltene Anruf erneut mit einem freien Terminal verbunden, so dass wieder eine Gesprächsverbindung zu einem Agenten hergestellt wird. Nun kann der zuvor abgespeicherte Kommentar wiedergegeben werden.

WO 99/21346 A1 betrifft ein interaktives Telefonanrufsystem.

Es stellt sich somit das Problem, ein Call-Center so zu betreiben, dass der geschilderte Zielkonflikt zwischen hoher Produktivität der Mitarbeiter einerseits und hoher Kundenzufriedenheit andererseits gelöst wird. Aufgabe der vorliegenden Erfindung ist also die Schaffung eines Verfahrens, mit dem ein Call-Center effektiver betrieben werden kann.

Diese Aufgabe wird durch das im Patentanspruch 1 angegebene Verfahren gelöst. Danach wird ein externer Anruf in an sich üblicher Weise zunächst mit einem freien Terminal eines Agenten verbunden. Kommt es zu einer akustischen Pause, deren Länge entweder der Agent nicht mehr tolerieren will oder die systemseitig vom Call-Center nicht mehr akzeptiert wird, so erfolgt eine Weiterschaltung des Anrufs auf eine separate Haltelinie, entweder manuell initiiert oder automatisch. Gleichzeitig oder kurz zuvor wird ein Kommentar des Agenten betreffend das unterbrochene Gespräch gespeichert. Dieser Kommentar wird der gehaltenen Verbindung automatisch zugeordnet. Ist der externe Anrufer nach einer bestimmten Zeit wieder bereit, das Gespräch fortzusetzen, so wird der so lange gehaltene Anruf erneut mit einem freien Terminal verbunden, so dass wieder eine Gesprächsverbindung zu einem Agenten hergestellt wird. Nun wird der zuvor abgespeicherte Kommentar wiedergegeben. Der Agent, der sich während der Gesprächspause mit einem oder mehreren anderen Anrufern beschäftigen konnte, wird durch den automatisch zugeordneten und genau zum richtigen Zeitpunkt wiedergegebenen Kommentar schnellstmöglich über den wesentlichen Inhalt des Gesprächs vor der Gesprächspause informiert, so dass das Anliegen des externen Anrufers ohne Wiederholung des ersten Gesprächsteils schnell und effektiv weiter bearbeitet werden kann.

Durch das erfindungsgemäße Verfahren können Unterbrechungen eines Kundengesprächs, die von dem Kunden selbst verursacht werden, zu anderweitiger produktiver Tätigkeit ausgenutzt werden, ohne dass der externe Anrufer das Gefühl hat, er sei mit seinem Anliegen abgewiesen oder auch nur unhöflich behandelt worden. Ein besonderer Vorteil des vorgeschlagenen Verfahrens besteht darin, dass die durch den externen Gesprächspartner verursachte Gesprächspause beliebig lang dauern kann, ohne dass ein Call-Center-Agent in dieser Zeit beansprucht wird. Die Speicherung und automatische Zuordnung eines Kommentars zu der bestehenden Verbindung gewährleistet eine schnelle und für beide Gesprächspartner angenehme Fortsetzung des unterbrochenen Gesprächs. Der oben erwähnte Zielkonflikt für den Agenten wird vermieden, wodurch sich die Produktivität des Call-Centers bei gleichzeitig gesteigerter Erreichbarkeit erhöht.

Bevorzugt wird der Kommentar des Agenten als gesprochene Audiodatei gespeichert und später akustisch wiedergegeben. Dabei hat es sich als besonders vorteilhaft erwiesen, wenn der gespeicherte Kommentar automatisch unmittelbar vor der Herstellung der erneuten Verbindung mit dem Terminal eines freien Agenten wiedergegeben wird. Dabei ist es natürlich zweckmäßig, dass die Wiedergabe des Kommentars nur für den Agenten, nicht aber für den externen Anrufer hörbar ist.

In Weiterbildung des erfindungsgemäßen Verfahrens verfügt die separate Haltelinie über eine interaktive Anrufsteuerung (IVR-System, Interactive Voice Response). Dadurch wird es dem externen Anrufer, der auf die separate Haltelinie weitergeschaltet wurde, ermöglicht, jederzeit die Fortsetzung des persönlichen Gesprächs mit einem Agenten zu initialisieren. Der externe Anrufer bestimmt dadurch selbst, wie lange sein Anruf gehalten wird bzw. wie lange die Gesprächspause dauert.

Ein großer Vorteil des erfindungsgemäßen Verfahrens besteht auch darin, dass der externe Anruf zunächst von einem ersten Call-Center-Agenten entgegengenommen und später, nach Initialisierung der erneuten Verbindung durch den externen Anrufer, durch einen anderen zweiten Agenten, der gerade frei ist, fortgesetzt werden kann. Speziell dann, wenn der externe Anruf zunächst an ein erstes Terminal eines ersten Agenten verbunden und die gehaltene Verbindung nach der Beendigung der Gesprächspause dann zu einem zweiten Terminal eines zweiten Agenten geleitet wird, ist der automatisch zugeordnete Kommentar des ersten Agenten für den zweiten Agenten eine unschätzbare Hilfe. Der externe Anrufer wird verblüfft und erfreut vernehmen, dass auch sein neuer Gesprächspartner über den ersten Teil des Gesprächs Bescheid weiß und sein Anliegen somit nahtlos weiterbearbeiten kann. Natürlich ist der gespeicherte Kommentar aber auch in dem Falle hilfreich, wenn das System das unterbrochene, jedoch gehaltene Gespräch wieder an dasselbe Terminal des Agenten, der das Gespräch bereits angenommen hatte, leitet.

Das vorgeschlagene Verfahren und die damit verbundenen Vorteile werden nachstehend anhand der beigefügten Zeichnungen näher erläutert. Es zeigen:
- Fig. 1: den Idealfall eines ohne Unterbrechung geführten Kundengesprächs;
- Fig. 2: die Probleme, die mit einer Unterbrechung des Kundengesprächs verbunden sind;
- Fig. 3: den Verlauf eines Kundengesprächs bei Anwendung des erfindungsgemäßen Verfahrens.

In allen Figuren ist der zeitliche Verlauf eines Kundenkontakts und darüber die entsprechende Dauer der Beanspruchung des (bzw. der) Call-Center-Agenten schematisch dargestellt.

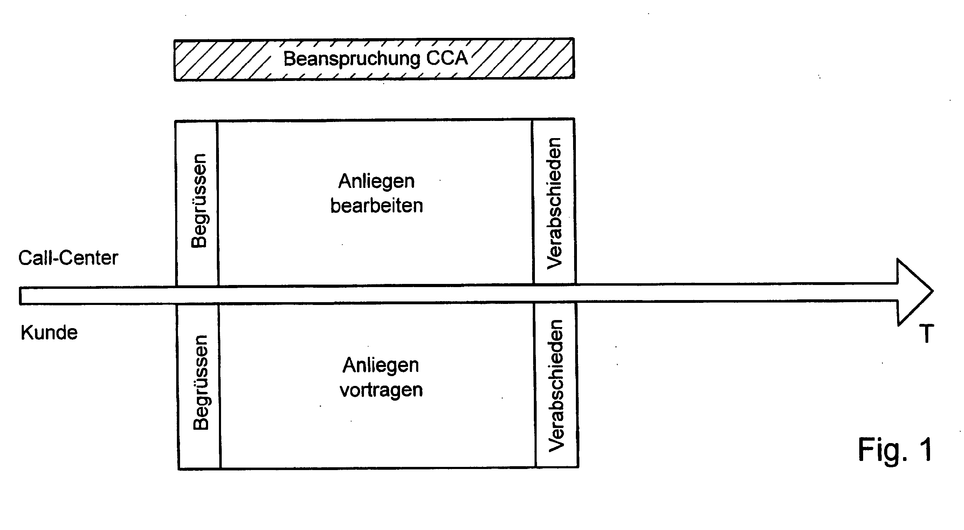

In dem in Figur 1 dargestellten Idealfall kann das Anliegen des externen Anrufers (Kunden) ohne Unterbrechung bearbeitet werden. Die Zeit, durch die der Call-Center-Agent (CCA) durch den Kundenkontakt beansprucht wird, ist fast ausschließlich mit produktiver Tätigkeit ausgefüllt.

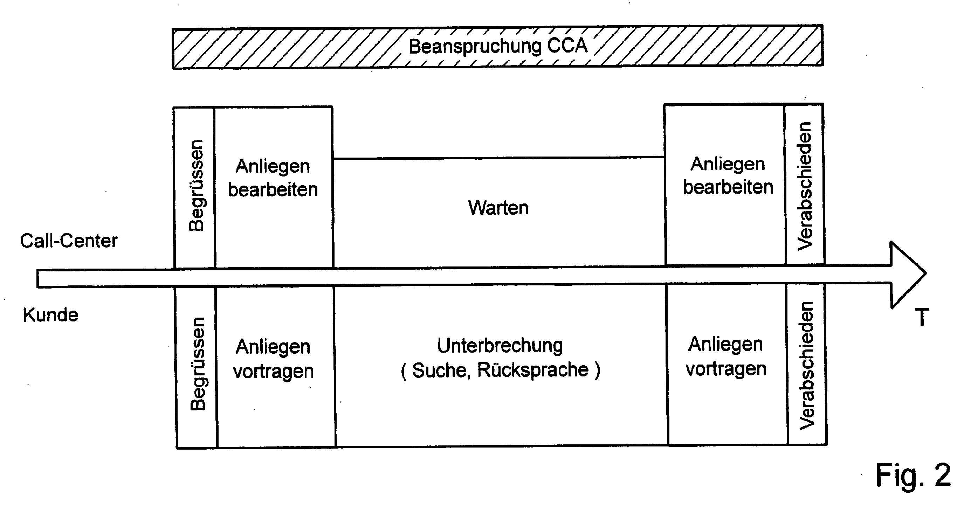

Bei dem in Figur 2 dargestellten Problemfall kommt es zu einer Unterbrechung des Gesprächs, beispielsweise weil der Kunde nach Daten zur Identifikation sucht oder Rücksprache mit einer Person im Hintergrund nimmt. Während dieser Gesprächspause bleibt der Call-Center-Agent (CCA) weiterhin beansprucht, seine Produktivität ist allerdings Null. Besonders unbefriedigend aus der Sicht des Call-Centers ist, dass der Produktivitäts-Verlust ausschließlich durch den Kunden verursacht wird, und dass die Zeitdauer der Unterbrechung weder absehbar noch beeinflussbar ist, es sei denn, der Kundenkontakt wird ganz abgebrochen, was dann wiederum den Kunden verärgern würde.

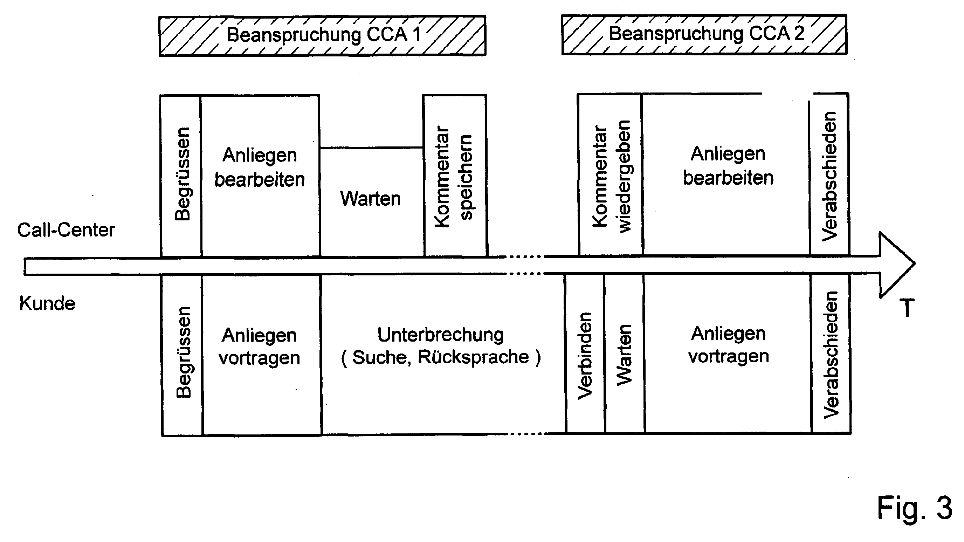

Bei dem in Figur 3 dargestellten Verlauf eines Kundenkontaktes wird der externe Anruf des Kunden zunächst von einem ersten Call-Center-Agenten (CCA 1) bearbeitet. Kommt es zu einer Unterbrechung des Gesprächs durch den Kunden, so wartet der Agent zunächst nach persönlichem Ermessen eine bestimmte, ihm zumutbar erscheinende Zeit ab. Die maximal zulässige Dauer der Pause ist vom System vorgegeben. Meldet sich der Gesprächspartner bis zu einem bestimmten Zeitpunkt nicht mehr zurück, so erfolgt eine Weiterschaltung des Anrufs auf eine separate Haltelinie. Gleichzeitig spricht der Agent einen Kommentar, der als Audiodatei gespeichert und automatisch zu der bestehenden Verbindung zugeordnet wird. Ist der Kunde wieder gesprächsbereit, so kann er mittels interaktiver Anrufsteuerung die erneute Verbindung mit einem Call-Center-Agenten initiieren. Im vorliegenden Beispiel wird die erneute Verbindung mit einem zweiten Terminal eines zweiten Call-Center-Agenten (CCA 2) hergestellt. Unmittelbar vor der erneuten Herstellung einer Sprechverbindung mit dem Kunden erfolgt automatisch die Wiedergabe des zu der gehaltenen Verbindung gehörenden Kommentars. Der zweite Call-Center-Agent (CCA 2) kann den Kunden, der nur ganz kurz warten musste, individuell und persönlich begrüßen und das Gespräch nahtlos an der Stelle fortsetzen, an der es sein Kollege (CCA 1) früher abbrechen musste.

Die mit der Anwendung des Verfahrens erzielbare Produktivitäts-Steigerung ergibt sich anschaulich aus einem Vergleich der Gesprächsverläufe der Figuren 2 und 3: Während bei dem Gesprächsverlauf von Figur 2 der Call-Center-Agent (CCA 1) auch während der Unterbrechung beansprucht bleibt, beschränkt sich bei dem in Figur 3 dargestellten Gesprächsverlauf die Beanspruchung des ersten Call-Center-Agenten (CCA 1) auf die Zeit vor der Weiterschaltung des Anrufs auf die Haltelinie, und beschränkt sich die Beanspruchung des zweiten Call-Center-Agenten (CCA 2) auf die Zeit nach der erneuten Verbindung des gehaltenen Anrufs. Die Summe der Zeiten der Beanspruchung beider Agenten insgesamt ist nur unwesentlich höher als bei dem anhand Figur 1 erläuterten Idealfall eines Kundenkontakts ohne jede Unterbrechung.

## Patentansprüche

1. Verfahren zum Betreiben eines Call-Centers, bei dem von auß en kommende Telefonanrufe automatisch auf Terminals verteilt werden, um von Call-Center-Agenten beantwortet zu werden, umfassend die Verfahrensschritte:
- Verbinden eines externen Anrufs mit einem freien Terminal eines Agenten; Automatisches Weiterschalten des Anrufs auf eine separate Haltelinie, falls es zu einer akustischen Pause kommt, deren Länge entweder der Agent nicht mehr tolerieren will oder die systemseitig von Call-Center nicht mehr akzeptiert wird;
- Speichern eines Kommentars des Agenten betreffend den Inhalt des Gesprächs zwischen Anrufer und Agent gleichzeitig oder kurz vor dem Weiterschalten des Anrufs;
- automatisches Zuordnen des Kommentars zu der bestehenden Verbindung;
- erneute Verbindung des gehaltenen Anrufs mit einem freien Terminal eines Agenten, falls der Anrufer wieder bereit ist, das Gespräch fortzusetzen;
- Wiedergeben des zu der gehaltenen Verbindung gehörenden Kommentars am Terminal des Agenten, wobei die Wiedergabe des Kommentars nur für den Agenten hörbar ist.

2. Verfahren nach Anspruch 1, **dadurch gekennzeichnet, dass** der Kommentar des Agenten als Audiodatei gespeichert und akustisch wiedergegeben wird.

3. Verfahren nach Anspruch 1 oder 2, **dadurch gekennzeichnet, dass** der gespeicherte Kommentar unmittelbar vor der Herstellung der erneuten Verbindung mit einem Terminal automatisch wiedergegeben wird.

4. Verfahren nach einem der Ansprüche 1 bis 3, **dadurch gekennzeichnet, dass** die separate Haltelinie mit einer interaktiven Anrufsteuerung verbunden wird, so dass die erneute Verbindung mit einem Terminal von dem externen Anrufer initialisiert werden kann.

5. Verfahren nach einem der Ansprüche 1 bis 4, **dadurch gekennzeichnet, dass** der externe Anruf zunächst mit einem ersten Terminal eines ersten Agenten verbunden wird, und dass die gehaltene Verbindung von der Haltelinie zu einem zweiten Terminal eines zweiten Agenten geleitet wird.

## Claims

1. Method for running a call centre, in which telephone calls coming from outside are automatically distributed to terminals to be answered by call centre agents, comprising the steps of:
- connecting an external call to an agent's free terminal;
- automatically forwarding the call to a separate holding line in the event that
there is an acoustic pause, the length of which either the agent will no longer tolerate or on the systems side is no longer accepted by the call centre;
- storing the agent's comments regarding the content of the conversation between caller and agent simultaneously or shortly before forwarding the call;
- automatically allocating the comments to the existing connection;
- reconnecting the call which is on hold to an agent's free terminal in the event that the caller is again prepared to continue the conversation;
- playing back the comments belonging to the connection which is on hold at the agent's terminal, playback of the comments being audible only to the agent.

2. Method according to claim 1, **characterised in that** the agent's comments are stored as an audio file and played back acoustically.

3. Method according to claim 1 or 2, **characterised in that** the stored comments are played back automatically immediately before making the reconnection to a terminal.

4. Method according to one of claims 1 to 3, **characterised in that** the separate holding line is connected to an interactive call control system, so that reconnection to a terminal can be initialised by the external caller.

5. Method according to any of claims 1 to 4, **characterised in that** the external call is first connected to a first terminal of a first agent, and **in that** the connection which is on hold is conducted from the holding line to a second terminal of a second agent.

## Revendications

1. Procédé pour exploiter un centre d'appel, selon lequel les appels téléphoniques qui viennent de l'extérieur sont répartis automatiquement sur des terminaux afin que des agents de centre d'appel y répondent, comprenant les phases suivantes :
- connexion d'un appel externe à un terminal libre d'un agent ;
- transfert automatique de l'appel à une ligne de conservation séparée, au cas où il se produit une pause acoustique dont l'agent ne veut plus tolérer la longueur ou qui n'est plus acceptée côté système par le centre d'appel ;
- mise en mémoire d'un commentaire de l'agent au sujet du contenu de la conversation entre l'appelant et l'agent, en même temps ou juste avant le transfert de l'appel ;
- affectation automatique du commentaire à la connexion existante ;
- nouvelle connexion de l'appel conservé à un terminal libre d'un agent au cas où l'appelant est à nouveau prêt à poursuivre la conversation ;
- lecture du commentaire appartenant à la connexion conservée, au niveau du terminal de l'agent, étant précisé que la lecture du commentaire ne peut être entendue que par l'agent.

2. Procédé selon la revendication 1, **caractérisé en ce que** le commentaire de l'agent est mis en mémoire et lu acoustiquement sous forme de fichier audio.

3. Procédé selon la revendication 1 ou 2, **caractérisé en ce que** le commentaire mis en mémoire est lu automatiquement juste avant l'établissement de la nouvelle connexion à un terminal.

4. Procédé selon l'une des revendications 1 à 3, **caractérisé en ce que** la ligne de conservation séparée est reliée à une commande d'appels interactive, de sorte que la nouvelle connexion à un terminal peut être initialisée par l'appelant externe.

5. Procédé selon l'une des revendications 1 à 4, **caractérisé en ce que** l'appel externe est tout d'abord connecté à un premier terminal d'un premier agent, et **en ce que** la connexion conservée est acheminée de la ligne de conservation vers un second terminal d'un second agent.
